# EUROPEAN PATENT APPLICATION

(11) **EP 4 435 985 A1**
(43) Date of publication of application: **25.09.2024**
(21) Application number: 23163279.5
(22) Date of filing: 21.03.2023
(51) Int. Cl.: H02G 3/18, H02G 3/12, H02G 3/14, H02G 3/08

(54) **APPARATUS OF AN ELECTRICAL INSTALLATION**

(71) Applicant: Berker GmbH & Co. KG, 66440 Blieskastel (DE)
(72) Inventor: POLI, Massimiliano, 25080 CALVAGESE DELLA RIVIERA (BS) (IT); BASSANI, Matteo, 25082 BOTTICINO (BS) (IT)
(74) Representative: Cabinet Nuss

(57) **Abstract**

An apparatus of an electrical installation has a base part and a complementing part connected by a fixing mechanism, which comprises a first element not operable by a user and a second element operable by a user. The first element comprises a receiving section for at least partially receiving the second element. The receiving section comprises a first engagement structure. The first element is an integral part of the base part or is configured for connecting or coupling with a corresponding structure thereof by shape and/or force. A second engagement structure, engageable by a tool, is arranged at a first end of the second element, which is rotatable around a first axis passing through the first and a second end of the second element, opposite thereto. The second element comprises a third engagement structure arranged distal from the first end of the second element and configured for interacting with the first engagement structure. The second element is configured for connecting or coupling with a corresponding structure of the complementing part by shape and/or force. The first engagement structure is configured to engage with the third engagement structure for blocking a movement of the first element relative to the second element along the first axis, in one of at least two axial positions of the first and the second element relative to each other, when the second element is in one of two or more first rotational positions, and to enable such relative movement in a second rotational position of the second element.

## Description

### FIELD OF THE INVENTION

The present invention relates to apparatus of electrical installations, in particular to a fixing mechanism for installing elements of an apparatus of an electrical installation, e.g., an insert of a power outlet or the like.

### BACKGROUND

Apparatus of electrical installations often comprise two or more elements, of which a base element may be installed in a wall, cable duct or other location, and is electrically connected to the electrical installation. Other elements may be mechanically connected to the base element, such as an aesthetical cover or an insert that provides protection against accidentally touching live parts of the electrical installation.

Depending on the mounting location and the way the base element is mounted therein, the relative distance between an insert and/or an aesthetical cover and a front-facing surface of the base element may vary. Therefore, the fixing mechanism must be adapted to compensate for various distances. Typically, screws or other threaded fixing elements are used as fixing mechanism since they inherently provide fixing properties along the entire length of the threading. However, screws or other threaded fixing elements require several turns for adjusting a desired distance when attaching an insert and/or an aesthetical cover to the base element, which can be time-consuming and cumbersome.

### SUMMARY OF THE INVENTION

It is an object of the present invention to provide a fixing mechanism for elements of an apparatus for electrical installations that provides the adaptability of the existing, threaded fixing mechanisms, while reducing the effort for using it. It is a further object of the present invention to provide an apparatus for electrical installations having such fixing mechanism, and elements thereof implementing respective parts or portions of the fixing mechanism or being configured to cooperate with the fixing mechanism. It is yet another object of the present invention to provide a method of installing apparatus for electrical installations having such fixing mechanism.

The aforementioned objects are achieved by the fixing mechanism of an apparatus of an electrical installation provided in claim 1, by the base part of an apparatus of an electrical installation provided in claim 14, by the complementing part of an apparatus of an electrical installation provided in claim 15, by the apparatus of an electrical installation provided in claim 16, and by the method of claim 17. Advantageous embodiments and developments are provided in respective dependent claims.

In accordance with a first aspect of the invention a fixing mechanism of an apparatus of an electrical installation is provided, the electrical apparatus having a base part and a complementing part. The fixing mechanism is being configured for releasably fixing the complementing part to the base part and comprises a first element or arrangement that is not operable by a user and a second element or arrangement that is operable by a user. In this context operable may be understood as directly operable by a user, or directly accessible by a user for operation, and not operable may be understood as not directly accessible by a user under normal circumstances.

The first element or arrangement comprises a receiving section adapted to at least partially receive at least portions of the second element or arrangement. The receiving section further comprises a first engagement structure. The first element or arrangement may be integral to the base part or may be configured for connecting or coupling with a corresponding structure thereof by shape and/or force.

A second engagement structure configured for being engageable by a tool operated by the user is arranged at a first end of the second element or arrangement. At least a part or portion of the second element or arrangement is rotatable around a first axis passing through the first end of the first element or arrangement and a second end of the second element or arrangement, opposite to the first end. The rotatable part or portion of the second element or arrangement is preferably of an elongated shape, i.e., longer than wide. The second element or arrangement comprises a third engagement structure, which is arranged distal from the first end of the second element or arrangement, i.e., at a distance therefrom and/or towards the second end. The third engagement structure is configured for interacting with the first engagement structure provided with the first element or arrangement. The second element or arrangement is further configured for connecting or coupling with the complementing part, e.g., by shape with a corresponding structure and/or by force. The connecting or coupling may occur at the first end of the second element but may also occur distal therefrom. Connecting or coupling may be understood as preventing any significant movement of the second element with respect to the complementing part in at least one direction, in particular in at least one direction along the first axis.

The first engagement structure is configured to engage with the third engagement structure for blocking, in one of at least two positions of the first and the second element or arrangement relative to each other along the first axis, a movement of the first element or arrangement relative to the second element or arrangement along said first axis, when the first element or arrangement and the rotatable part or portion of the second element or arrangement are in one of two or more first rotational positions around the first axis relative to each other. The axial movement may be blocked in one direction only but may also be blocked in both directions. The at least two first rotational positions of the first element or arrangement and the rotatable part or portion of the second element or arrangement relative to each other around the first axis may coincide with a displacement of the first and the second element or arrangement relative to each other along the first axis.

The first engagement structure is further configured to permit or enable, in a second rotational position of the first element or arrangement and the rotatable part or portion of the second element or arrangement around the first axis relative to each other, such relative axial movement along the first axis. The various rotational positions of the first element or arrangement and the rotatable part or portion of the second element or arrangement relative to each other may be changed or modified by rotating the rotatable part portion of the second element or arrangement around the first axis when the second element or arrangement, or parts or portions thereof, is/are received by or in the receiving section of the first element or arrangement, while a rotation of the first element or arrangement is prevented. The first and the second rotational positions of the first element or arrangement and the rotatable part or portion of the second element or arrangement relative to each other preferably cover respective mutually exclusive ranges of rotational angles around the first axis.

In a first variant of the fixing mechanism in accordance with the first aspect of the invention the first engagement structure may comprise step-like engagement surfaces, or engagement areas, arranged along at least a portion of a circumference of the receiving section. The rotatable part or portion of the second element or arrangement has a shaft-like section, and the third engagement structure of the second element or arrangement comprises at least one engagement pin or protrusion protruding outwards from the shaft-like section. The at least one engagement pin or protrusion may protrude from the surface of the shaft-like section or may comprise an element that passes through the shaft-like section and protrudes at opposite sides thereof. It is also possible to provide the engagement pin or protrusion on a support that encloses the shaft-like section. The latter may require securing the support against rotation around the shaft-like section, e.g., through a non-circular cross section of the shaft-like section.

In one or more embodiments of the first variant of the fixing mechanism the at least one engagement pin or protrusion is movably mounted in or on the shaft-like section, permitting a movement along or parallel to the first axis. The movement is limited within an upper and a lower limit. In embodiments in which an engagement pin passes through the shaft-like section the engagement pin may be mounted in an elongated bore hole passing through the shaft-like section and may move within the elongated hole.

In embodiments in which the at least one engagement pin or protrusion is mounted on a support enclosing the shaft-like section the support may be movable along the first axis. The movement of the support along the first axis may be limited by the cross-sectional dimensions of the shaft-like section being larger at the limits or outside of the moving range of the support than within the moving range. A rotation of the support may be prevented by the cross-sectional shape of the shaft and the matching shape of the support.

In one or more embodiments of the first variant of the fixing mechanism the engagement pin or protrusion is spring-loaded in a direction towards the second engagement structure of the second element or arrangement. Spring-loading may preferably be provided by a helical coil spring, or by a resiliently deflectable or compressible material. A plunger may be provided between an end of the spring, or the resiliently deflectable or compressible material, and the engagement pin or protrusion. In embodiments in which the at least one engagement pin or protrusion is mounted on a support enclosing the shaft-like section the support may likewise be spring-loaded. The spring or the resiliently deflectable or compressible material may be supported by or on the base part of the apparatus of the electrical installation.

In one or more embodiments of the first variant adjacent step-like engagement surfaces, or engagement areas, are separated from each other by a ridge rising above the respective engagement surfaces, or engagement areas. The ridge, together with a slope leading to a neighbouring engagement surface, or engagement area, form trough-like resting zones.

In a second variant of the fixing mechanism in accordance with the first aspect of the invention the first engagement structure may comprise one or more edges or rims of one or more first resilient elements. The one or more first resilient elements may comprise leaf-springs bent to shape or the like. The rotatable part or portion of the second element or arrangement has a shaft-like section that has a smooth surface in a first radial sector, and that has two or more circumferential grooves in a second sector that abuts the first sector. The grooves are preferably parallel but may also run obliquely. The smooth surface may be curved around the first axis or may be flat. The grooves may be equidistantly placed along the shaft-like section of the second element or arrangement. The grooves may be asymmetrical in shape, having a ramp-like slope on one side, while the surface of the other side lies substantially perpendicular to the first axis, or is even negatively inclined thereto. The one or more edges or rims of the one or more first resilient elements engage with a respective one of the two or more grooves when the rotatable part or portion of the second element or arrangement is in a first one of one or more first rotational positions relative to the first element or arrangement, preventing or at least significantly countering a translational movement between the first and the second element or arrangement along the first axis in at least one direction. When the smooth surface of the rotatable part or portion of the second element or arrangement is facing the one or more edges or rims of the one or more first resilient elements, such movement is enabled.

In one or more embodiments of the second variant of the fixing mechanism a second resilient element, e.g., a spring, is arranged with the first element or arrangement, which second resilient element is arranged to spring-load the rotatable part or portion of the second element or arrangement in at least one of the at least two axial positions of the first element or arrangement and the rotatable part or portion of the second element or arrangement relative to each other. This embodiment may facilitate removing the second element or arrangement from the complementing part by pushing the second element away from the base part. To this end, the second resilient element may be in contact with the second element or arrangement, e.g., at the second end of the rotatable part or portion of the second element.

In one or more embodiments of the second variant of the fixing mechanism a securing element is provided with the second element or arrangement, e.g., with the rotatable part or portion of the second element or arrangement, which securing element is configured for cooperating with a securing structure of the complementing part, e.g., a rim of a bore hole in the complementing part through which the second element or arrangement is passed, for preventing separation of the second element or arrangement from the complementing part. The securing element may comprise a retaining ring mounted in a groove of the shaft-like section of the second element or a protrusion that extends from the shaft-like section of the second element, preventing the second element from passing through a mounting hole of the complementing part.

In one or more embodiments of the second variant of the fixing mechanism the first resilient element and/or the second resilient element of the first element or arrangement is/are electrically connected to an earth contact of the apparatus of an electrical installation. The first resilient element and/or the second resilient element may be an integral part of an earth contact assembly or may be separate parts.

In one or more embodiments of the second variant of the fixing mechanism the first engagement structure, the first resilient element and/or the second resilient element are a single part.

In a third variant of the fixing mechanism in accordance with the first aspect of the invention the first engagement structure may comprise two or more edges or rims arranged in or on a receiving section. The third engagement structure comprises a locking element that is associated with the second element or arrangement. The receiving section is arranged to at least partially receive the second element or arrangement and the locking element associated therewith. The locking element has one or more resilient legs, e.g., two opposing resilient legs, and a catch structure protrudes from each leg. The catch structures preferably point away from each other. The rotatable part or portion of the second element or arrangement has one or more first protrusions, e.g., two opposing first protrusions, arranged proximal to the second end of the second element or arrangement. The one or more first protrusions are configured to push the one or more resilient legs away from the rotatable part or portion of the second element or arrangement when the rotatable part or portion of the second element or arrangement is in a first rotational position relative to the locking element, thereby forcing the respective catch structure of the one or more resilient legs to engage with one of the two or more edges or rims arranged in or on the receiving section. When the rotatable part or portion of the second element or arrangement is in a second rotational position relative to the locking element the one or more first protrusions do not engage with the resilient legs and permit the respective catch structure of the one or more resilient legs to disengage from the edges or rims arranged in or on the receiving section.

In one or more embodiments of the third variant of the fixing mechanism the locking element is secured against dissociation from the second element or arrangement, e.g., from the rotatable part or portion of the second element or arrangement. Securing may comprise use of retaining ring mounted in a groove of the shaft-like section of the second element. Alternatively, at least one protrusion that extends from the shaft-like section of the rotatable part or portion of the second element or arrangement at or near the second end of the rotatable part or portion of the second element may be provided, which engages with the resilient legs of the locking element when the rotatable part or portion of the second element and the locking element are in a third rotational position relative to each other.

In one or more embodiments of the third variant of the fixing mechanism guide means are provided in the base part and/or in or on the receiving section, for preventing a rotation of the locking element relative to the receiving section when the rotatable part or portion of the second element or arrangement is rotated. The guide means may be formed by shape of an opening of the receiving section or may comprise guide ridges or the like.

In accordance with the second aspect of the present invention an apparatus of an electrical installation comprises a base part and a complementing part as described hereinafter. The base part comprises a first body part and functional part. The first body part comprises a housing or enclosure, and further comprises a first element or arrangement of a fixing mechanism in accordance with the first aspect of the invention, or is configured for connecting or coupling with such first element or arrangement of a fixing mechanism via a corresponding structure of the base part, e.g., by shape and/or force. The first body part may further comprise one or more mounting elements, e.g., a frame, for mounting the first body part in a wall, a cable duct, or the like. The functional part may comprise one or more terminals for connecting to conductors of an electrical installation. The functional part may implement, inter alia, a wall outlet, a switch assembly, or the like. The first body part and the functional part may be separate parts that are combined, or an integral part. The base part may be configured to at least partially receive the complementing part, e.g., in a recessed section that provides access the functional part.

The complementing part comprises a second body part, which comprises or is configured to receive or hold a second element or arrangement of a fixing mechanism in accordance with the first aspect of the invention. The second body part may have a section that is configured to be receivable in a corresponding section of the first body part of the base part.

In accordance with a third aspect of the invention a method of installing an apparatus of an electrical installation in accordance with the second aspect of the present invention is provided. The method comprises providing a base part and a complementing part, connecting the base part with the electrical installation, mounting the base part in a designated location, mating the base part and the complementing part, and pushing or rotating the rotatable part or portion of the second element or arrangement of the fixing mechanism until the complementing part attains a predetermined or desired position relative to the base part. If the second element or arrangement of the fixing mechanism is not provided with the complementing part, the method may further comprise providing the second element or arrangement and positioning it for being received in the complementing part and, ultimately, in the first element or arrangement of the fixing mechanism that is provided with the base part.

The fixing mechanism described hereinbefore advantageously facilitates the mounting and/or assembly of components or parts of all kinds of electrical apparatus, including but not limited to electrical outlets, switches, and the like.

### BRIEF DESCRIPTION OF THE DRAWING

In the following section aspects of the invention will be described with reference to the drawing in which
- Fig. 1: shows a cut view of a first exemplary apparatus of an electrical installation comprising a base part and a complementary part, the latter being fixed to the former by a fixing mechanism in accordance with the first variant of the first aspect of the invention,
- Fig. 2: shows a detail of the fixing mechanism of the first variant of the exemplary apparatus of figure 1,
- Fig. 3: shows a schematic view of a detail of the complementing part,
- Fig. 4: shows a detail of the base part, the complementing part and the second element or arrangement of the first variant of the fixing mechanism,
- Fig. 5: shows a perspective view of a schematic second element or arrangement of the first variant of the fixing mechanism in accordance with the first aspect of the present invention,
- Fig. 6: shows a cross-sectional view of a schematic second element or arrangement of the first variant of the fixing mechanism in accordance with the first aspect of the present invention of figure 5,
- Fig. 7: shows a cut view of a second exemplary apparatus of an electrical installation comprising a base part and a complementary part, the latter being fixed to the former by a fixing mechanism in accordance with the second variant of the first aspect of the invention,
- Fig. 8: shows a perspective view of a schematic second element or arrangement of the second variant of the fixing mechanism in accordance with the first aspect of the present invention,
- Fig. 9: shows cross-sectional views of a schematic second element or arrangement of the second variant of the fixing mechanism in accordance with the first aspect of the present invention of figure 8,
- Fig. 10: shows a first variant of the first engagement structure and the second resilient element in accordance with the second variant of the fixing mechanism being combined into a single piece,
- Fig. 11: shows a second variant of the first engagement structure and the second resilient element in accordance with the second variant of the fixing mechanism being combined into a single piece,
- Fig. 12: shows a schematic view of the cooperation of engaged first and third engagement structures in accordance with the second variant of the fixing mechanism and the action of the second resilient element on the rotatable part or portion of the second element or arrangement,
- Fig. 13: shows a schematic view of the cooperation of disengaged first and third engagement structures in accordance with the second variant of the fixing mechanism, and the action of the second resilient element on the rotatable part or portion of the second element or arrangement,
- Fig. 14: shows a detail of a development of the exemplary fixing mechanism in accordance with the second variant of the first aspect of the present invention discussed with reference to figures 7 to 13,
- Fig. 15: shows a cut view of a third exemplary apparatus of an electrical installation comprising a base part and a complementary part, the latter being fixed to the former by a fixing mechanism in accordance with a third variant of the first aspect of the invention,
- Fig. 16: shows a perspective view of an exemplary rotatable part or portion of the second element or arrangement 200 of the third variant of the fixing mechanism in accordance with the first aspect of the present invention,
- Fig. 17: shows a schematic cross-sectional view of the cooperation of engaged first and third engagement structures in accordance with the third variant of the fixing mechanism,
- Fig. 18: shows a schematic cross-sectional view of the cooperation of disengaged first and third engagement structures in accordance with the third variant of the fixing mechanism, and
- Fig. 19: shows a flow diagram of a method 300 in accordance with the third aspect of the present invention.

In the figures identical or similar elements may be referenced using the same reference designators.

### DESCRIPTION OF EMBODIMENTS

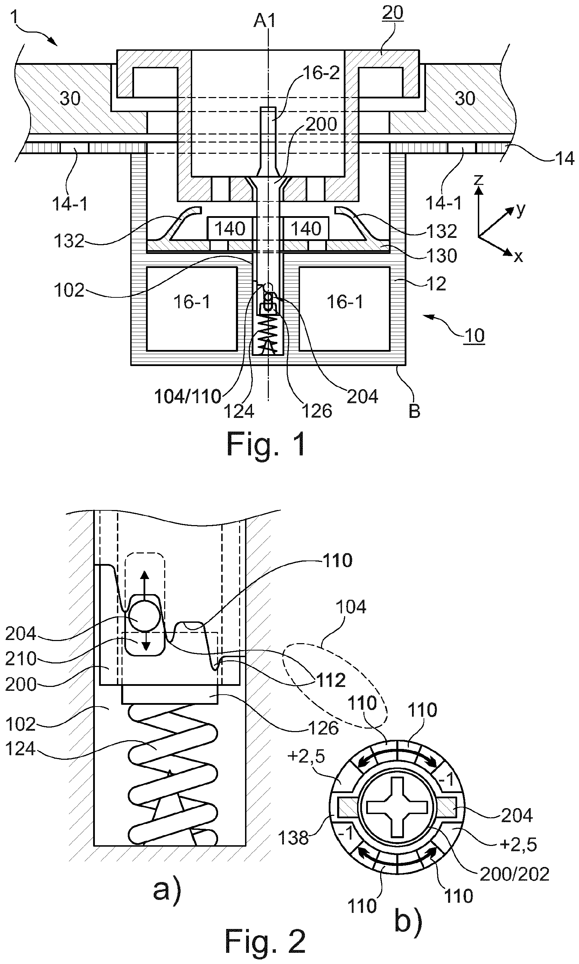

Figure 1 shows a cut view of a first exemplary apparatus 1 of an electrical installation comprising a base part 10 and a complementary part 20, the latter being fixed to the former by a fixing mechanism in accordance with the first variant of the first aspect of the invention. The exemplary electrical apparatus is a power outlet, whose base part 10 comprises a first body part 12, a frame 14 and a functional part 16. The frame 14 may be used for fixing the base part 10 in a designated location and may be provided with through holes 14-1. The functional part 16, some elements of which are only represented in the figure as blocks 16-1 without any further details, comprises, for example, terminals for connecting the apparatus to the electrical installation and contacts for a plug that is insertable into the power outlet (plug not shown in the figure). An earth contact 16-2 is shown extending into an insertion well of the power outlet. An aesthetic cover 30 is arranged on top of the base part 10, covering the frame 14. A complementing part 20 is arranged on top of the aesthetic cover 30, a part of complementing part 20 protruding into the base part 10. A first element or arrangement of a fixing mechanism in accordance with the first variant of the first aspect of the present invention is provided with the base part 10. The first element or arrangement, which is not explicitly marked in the figure, comprises a receiving section 102, e.g., a bore, which is configured to partially receive a second element or arrangement 200 of the fixing mechanism in accordance with the first variant of the first aspect of the present invention. Bore 102 has a first engagement structure 104, which in the example of figure 1 comprises a step-like arrangement of engagement surfaces 110. The second element or arrangement 200 is inserted into bore 102, passing through an opening in the complementing part 20, which opening is configured for connecting or coupling with a corresponding structure of the second element or arrangement 200. Here, the second element or arrangement 200 has a screw-like body with a head and a shaft. The connecting or coupling is achieved through the conical surface of the screw head and a corresponding conical surface of the bore 102, which have more or less identical slopes (not identified in the figure). The second element or arrangement 200 further has a third engagement structure 204 that is configured for interacting with the first engagement structure 104 provided with the first element or arrangement. Here, the third engagement structure 204 comprises a pin that is movably maintained in the shaft of the second element or arrangement 200 and that protrudes outside of the shaft's circumference. The protruding section of the pin 204 engages with the first engagement structure 104. Pin 104 may be maintained in an elongated hole in the shaft and may be forced towards the screwhead-like part of the second element or arrangement 200 by means of a second resilient element 124, e.g., a helical spring, and a plunger 126, which exert a corresponding force on the pin 104.

In the figure, an upper surface of complementing part 20 is not yet flush with an upper surface of the aesthetic cover 30. When a rotatable part or portion of the second element or arrangement 200 is rotated in a first direction, the pin 104 is forced to an engagement surface of the first element or arrangement that is located further towards a bottom end B of the base part 10 and will pull the second element or arrangement 200 in the same direction. This will also pull the complementing part 20 towards the bottom end B of the base part 10. The complementing part 20 may be in contact with one or more third resilient elements 132, which exert a force on the complementing part 20 directed away from the bottom end B of the base part 10. The resilient elements 132 may be a part of a cover 130 provided for covering the functional part 16-1 of the base part 10. A shutter 140 may be provided for covering openings in the cover 130 when no plug is inserted into the power outlet.

Figure 2 shows a detail of the fixing mechanism of the first exemplary apparatus 1 of figure 1. In figure 2 a) the step-like engagement surfaces 110, or engagement areas, arranged along at least a portion of a circumference of the receiving section 102 are shown in greater detail. The engagement surfaces 110, or engagement areas, of element or arrangement of the fixing mechanism are bounded by bevelled edges, which provide a tangible and audible feedback when the second element or arrangement 200 of the fixing mechanism is rotated and the pin 204 is brought on the next engagement surface 110. At the same time the bevelled edges provide a discrete, stepwise and stable adjustment of the position of the first and second elements or arrangements relative to each other and, as a consequence, of the position of the base part 10 and the complementing part 20 relative to each other. The second element or arrangement 200 of the fixing mechanism can be turned until the base part 10 and the complementing part 20 are in a desired position relative to each other, e.g., their surfaces are flush. The pin 204 is spring-loaded via second resilient element 124 and plunger 126. The elongated hole that holds pin 204 permits a movement thereof that is required to pass over the bevelled edges when the second element or arrangement 200 of the fixing mechanism is rotated.

In figure 2 b) a top view of the second element or arrangement 200 is shown, together with a schematic view of the step-like engagement surfaces 110 of the first element or arrangement of the fixing mechanism. Pin 204 is inserted into the first element or arrangement via a cut-out 138 and extends and protrudes at both sides of the second element 200. The step-like engagement surfaces 110 are indicated by the sectors, the numbering at the extreme ends of the two sets of sectors representing the adjustable variation of the relative position of the first element or arrangement and the second element or arrangement 200 relative to each other. The double-pointed arrows indicate the rotation directions. The rotation can be imparted on the second element 200 by means of a tool engaged with a second engagement structure 202 of the second element 200, e.g., a screwdriver, represented by the Phillips head shape.

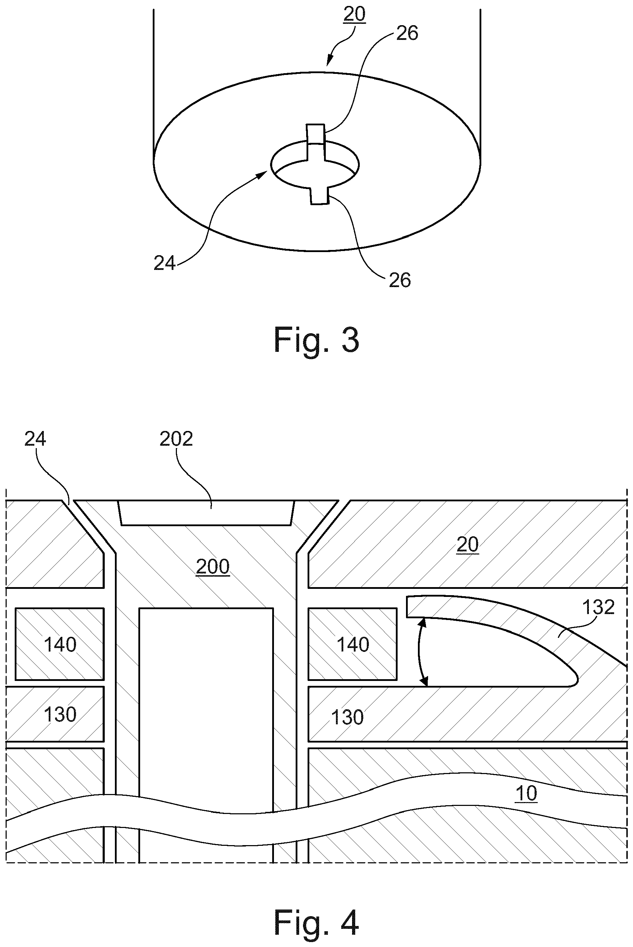

Figure 3 shows a schematic view of a detail of the complementing part 20, more specifically of the bottom surface of an insertion well for a power plug. The bottom surface has an opening 24 that permits inserting the second element or arrangement 200 of the fixing mechanism. The opening is of generally round shape and has two opposing additional cut-outs 26 through which the pin 204 of the second element or arrangement 200 of the fixing mechanism can be inserted.

Figure 4 shows a detail of the base part 10 and the complementing part 20 of the apparatus 1, as well as the second element or arrangement 200 of the fixing mechanism. The only visible portion of the complementing part 20 is the bottom of the insertion well and the opening 24 therein. Opening 24 has a chamfered wall portion, that generally corresponds with the chamfering of the screw head-like end of the second element or arrangement 200 of the fixing mechanism, which also comprises the second engagement structure 202. The second element or arrangement 200 can be hollowed out, permitting the insertion of a further resilient element that may exert a force on the pin 204. The second engagement structure 202 may comprise a slot for a screwdriver or the like. A shutter element 140 may be located between an underside of the complementing part 20 and an upper side of a cover 130. A third resilient element 132, which generally is supported by the base part 10 and in this example is a part of the cover 130, is configured to exert a force on the complementing part 20 when the distance between the base part 10 and the complementing part 20 is below a certain threshold. As mentioned before, the third resilient element 132 may be a part of the cover 130, which generally covers the upper side of the base part 10, the cover 130 having openings that provide necessary access to electrical contacts for proper function. The third resilient element 132 may be a spring-like structure formed from a resilient material or may be formed from an elastically compressible material. The third resilient element 132 maintains a loading between the base part 10 and the complementing part 20, preventing any loose movement of the two parts relative to each other when the second element or arrangement 200 of the fixing mechanism is engaged.

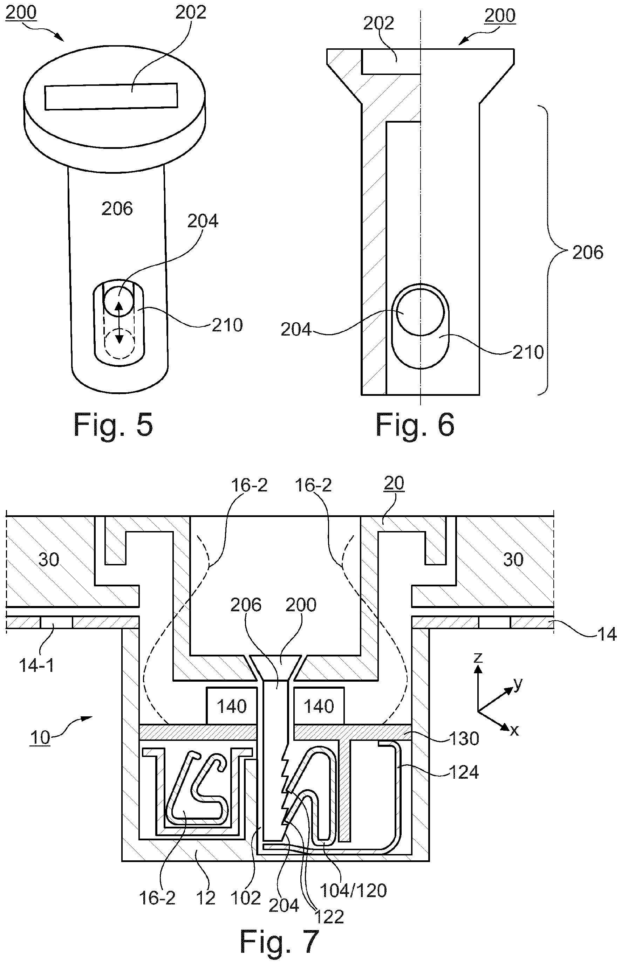

Figure 5 shows a perspective view of a schematic second element or arrangement 200 of the first variant of the fixing mechanism in accordance with the first aspect of the present invention. The second element or arrangement 200 is generally screw-like, i.e., has a head section with a second engagement structure 202, e.g., a slot for receiving a blade of a screwdriver, and a shaft-like section 206. The shaft-like section 206 may be hollow. An elongated hole 210 extends through the shaft-like section 206, the elongated shape of the hole running essentially parallel to the shaft-like section 206. A third engagement structure 204, e.g., a pin extending beyond the circumference of the shaft-like section 206, is movably maintained in the elongated hole 210. The motion of the third engagement structure 204, indicated by the double-pointed arrow and the representation of a displaced engagement structure 204 shown in dashed lines, is limited by the dimensions of the elongated hole 210.

Figure 6 shows a cross-sectional view of a schematic second element or arrangement 200 of the first variant of the fixing mechanism in accordance with the first aspect of the present invention of figure 5. Here, the hollow shaft-like section 206 is shown. A resilient element, e.g., a helical spring or a resiliently compressible material, may be placed between the third engagement structure 204 and the head section of the second element or arrangement 200, for exerting a force on the third engagement structure 204 away from the head section (resilient element not shown in the figure).

Figure 7 shows a cut view of a second exemplary apparatus 1 of an electrical installation comprising a base part 10 and a complementary part 20, the latter being fixed to the former by a fixing mechanism in accordance with the second variant of the first aspect of the invention. Again, the exemplary electrical apparatus is a power outlet, whose base part 10 comprises a first body part 12, a frame 14 and a functional part. The frame 14 may be used for fixing the base part 10 in a designated location and may be provided with through holes 14-1. The functional part, which is not shown in the figure, comprises, for example, terminals for connecting the apparatus to the electrical installation and contacts for a plug that is insertable into the power outlet. An aesthetic cover 30 is arranged on top of the base part 10, covering the frame 14. A complementing part 20 is arranged on top of the aesthetic cover 30, a part of complementing part 20 protruding into the base part 10. A first element or arrangement of a fixing mechanism in accordance with the second variant of the first aspect of the present invention is provided with the base part 10.

The first element or arrangement, which is not explicitly identified in the figure, comprises a receiving section 102, e.g., a bore, which is configured to partially receive a second element or arrangement 200 of the fixing mechanism in accordance with the second variant of the first aspect of the present invention. A first engagement structure 104 of the first element or arrangement is provided with the base part 10, which in the example of figure 7 is a first resilient element 120 with two edges or ends 122 protruding into the receiving section 102.

A second element or arrangement 200 is inserted into bore 102, passing through an opening in the complementing part 20, which opening is configured for connecting or coupling with a corresponding structure of the second element 200. Here, the second element 200 has a screw-like body with a head and a shaft-like section 206. The connecting or coupling is achieved through the conical surface of the screw head and a corresponding conical surface of the bore 102, which have more or less identical slopes (not identified in the figure). The second element or arrangement 200 further has a third engagement structure 204 that is configured for interacting with the first engagement structure 104 provided with the first element. Here, the third engagement structure 204 is provided through a sawtooth-shaped surface of a portion of the shaft, the remainder of the circumference of the shaft being smooth. The edges or ends of the first engagement structure 104 protruding into the receiving section 102 engage with the sawtooth-shaped surface of the shaft when it is oriented towards the first engagement structure 104. A second resilient element 124, e.g., a leaf spring, is provided with the first element or arrangement, exerting a force on the second element or arrangement 200 towards the screwhead-like part of the second element 200. The second resilient element 124 may partially push the second element or arrangement 200 out of the receiving section 102 when the first and third engagement structures 104, 204 are disengaged.

The fixing mechanism in accordance with the second variant of the first aspect of the present invention permits pushing the second element or arrangement 200 into the receiving section 102 and, when the orientation of the first and second element or arrangement relative to each other permit an engagement, will immediately provide a secure attachment of the base part 10 and the complementing part 20 when the second element or arrangement is pushed into the receiving section 102. For detaching the complementing part 20 from the base part 10 it will suffice to turn the second element or arrangement 200 until the smooth portion of its shaft will face the first engagement structure 104. A resilient element that is configured to exert a force on the complementing part 20 when the distance between the base part 10 and the complementing part 20 is below a certain threshold is not shown in this figure, but may be of the same construction as the one shown in figures 1 and 4. The figure further shows an earth contact 16-2 and an earth alveolus 16-4.

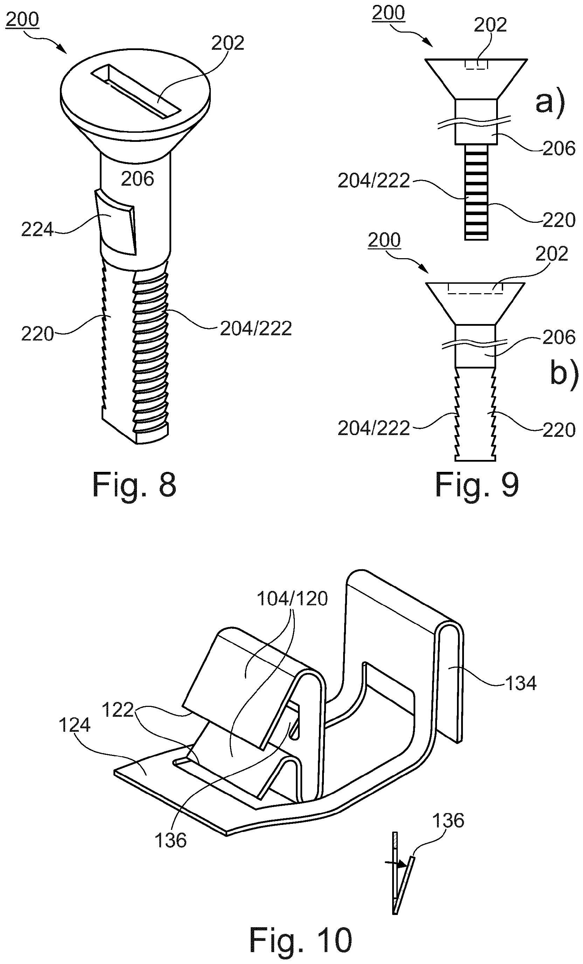

Figure 8 shows a perspective view of a schematic second element or arrangement 200 of the second variant of the fixing mechanism in accordance with the first aspect of the present invention. The second element or arrangement 200 is generally screw-like, i.e., has a head section with a second engagement structure 202, e.g., a slot for receiving a blade of a screwdriver, and a shaft-like section 206. The shaft-like section 206 has a portion that is smooth, and a portion carrying the third engagement structure 204, which itself comprises a first radial section 220 having a smooth surface and a second radial section 222 having a surface that is sawtooth-shaped, as mentioned above. The smooth portion may have a flat surface, as shown in the figure, or may have an arched surface corresponding to the circumference of shaft 206. A securing element 224 may be provided on the shaft, for preventing the second element or arrangement 200 from being fully detached from the complementing part 20.

Figure 9 shows cross-sectional views of a schematic second element or arrangement of the second variant of the fixing mechanism in accordance with the first aspect of the present invention of figure 8.

Figure 9 a) shows a first side view of the second element or arrangement 200. In this view the smooth surfaces in the first radial sector 220 of the third engagement structure 204 are visible at opposing sides of the lower part of the shaft-like section 206. The smooth surface, when facing the first engagement structure 104 of the first element or arrangement, permits separating the first element or arrangement from the second element or arrangement 200.

Figure 9 b) shows a second side view of the second element or arrangement 200. In this view the sawtooth-shaped surfaces of the third engagement structure 204 are visible at opposing sides of the lower part of the shaft-like section 206. The sawtooth-shaped surface, when facing the first engagement structure 104 of the first element or arrangement, engages with said first engagement structure 104 and prevents separating the first element or arrangement from the second element or arrangement 200.

Figure 10 shows a first variant of the first engagement structure 104 and the second resilient element 124 in accordance with the second variant of the fixing mechanism being combined into a single piece. Like the first engagement structure 104 shown in figure 7 the first engagement structure 104 has two edges or ends 122 that engage with the third engagement structure 204 of the second element or arrangement 200, providing redundancy and improving the alignment of the second element or arrangement 200 in the base part 10. The edges or ends 122 are a part of or formed by a first resilient element 120. The second resilient element 124 not only helps separating the first element or arrangement from the second element or arrangement 200, but also helps maintaining a locking tension between the first element or arrangement from the second element or arrangement 200. A locking element 136 may be provided with the first engagement structure 104, for securing the position thereof in the base part 10. A detail of the locking element 136 is shown in a side view below the main figure.

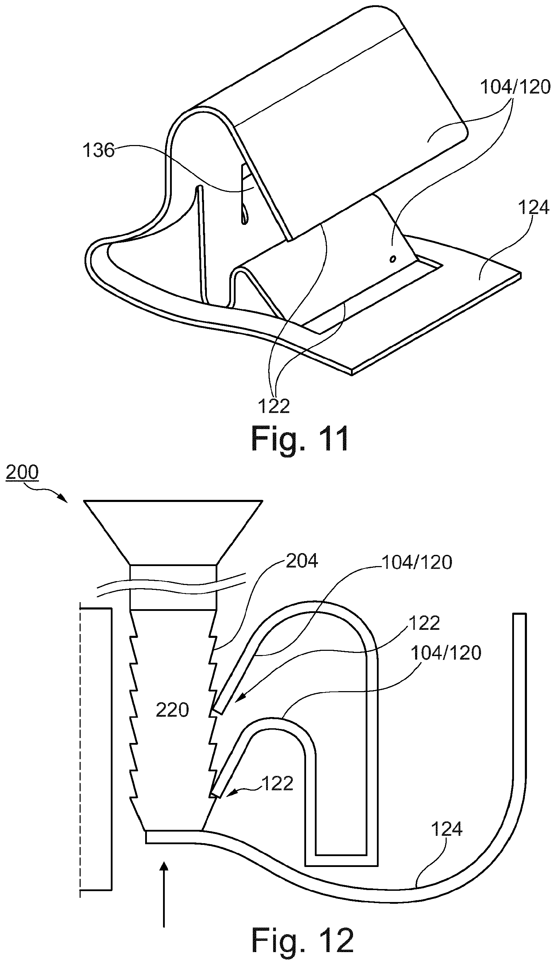

Figure 11 shows a second variant of the first engagement structure 104 and the second resilient element 124 in accordance with the second variant of the fixing mechanism being combined into a single piece. The single piece corresponds to the one shown in figure 10 except for the suppressed mounting section 134.

Figure 12 shows a schematic view of the cooperation of engaged first and third engagement structures 104, 204 in accordance with the second variant of the fixing mechanism, and the action of the second resilient element 124 on the second element or arrangement 200. The figure clearly shows how the edges or ends 122 of the first engagement structure 104 lock onto features of the sawtooth-like surface of the third engagement structure 204. The second resilient element 124 acts on the lower end of the second element or arrangement 200 and pushes it against the edges or ends 122 of the first engagement structure 104, indicated by the arrow.

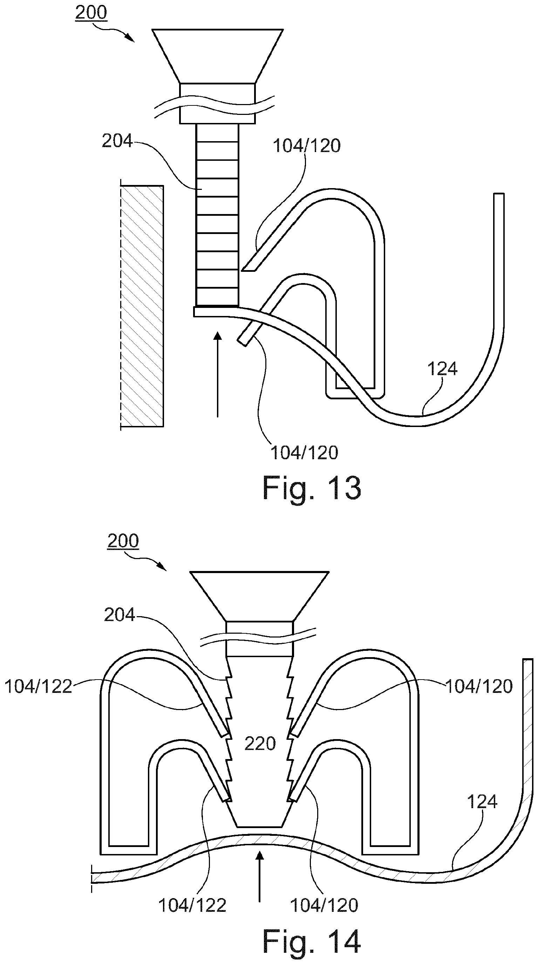

Figure 13 shows a schematic view of the cooperation of disengaged first and third engagement structures 104, 204 in accordance with the second variant of the fixing mechanism, and the action of the second resilient element 124 on the second element or arrangement 200. It is easy to see how the smooth surfaces of the second element or arrangement 200 provide no features to lock with the edges or ends of the first engagement structure 104 and, consequently, permit separation of the first and third engagement structures 104, 204.

Figure 14 shows a detail of a development of the exemplary fixing mechanism in accordance with the second variant of the first aspect of the present invention discussed with reference to figures 7 to 13. Here, first engagement structures 104 are provided on opposite sides of the second element or arrangement 200, which may provide a more secure locking and improved guiding of the second element or arrangement 200. The numbering of the elements and the functioning principle is the same as the one previously discussed.

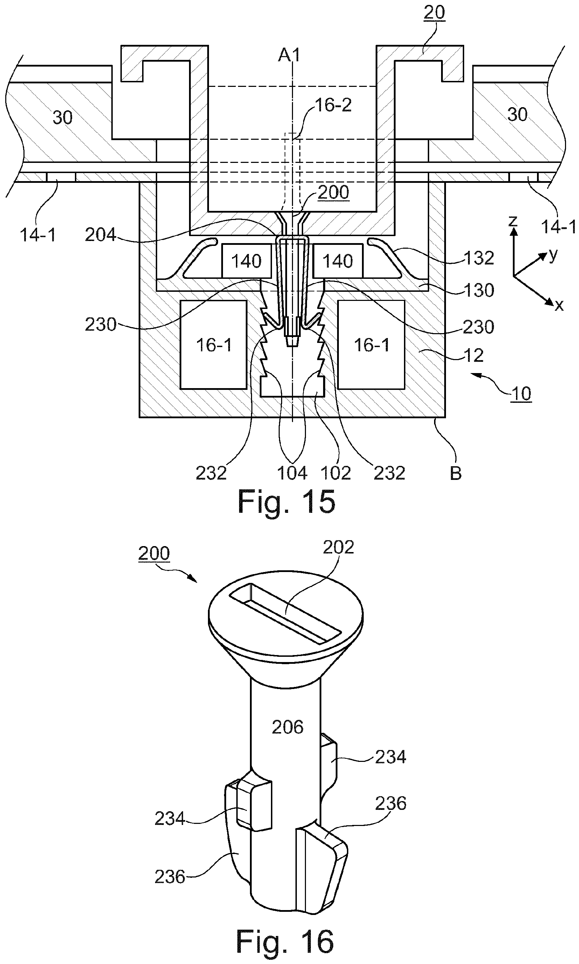

Figure 15 shows a cut view of a third exemplary apparatus 1 of an electrical installation comprising a base part 10 and a complementary part 20, the latter being fixed to the former by a fixing mechanism in accordance with a third variant of the first aspect of the invention. Again, the exemplary electrical apparatus is a power outlet, whose base part 10 comprises a first body part 12, a frame 14 and a functional part 16. The frame 14 may be used for fixing the base part 10 in a designated location and may be provided with through holes 14-1. The functional part 16, some elements of which are only represented in the figure as blocks 16-1 without any further details, comprises, for example, terminals for connecting the apparatus to the electrical installation and contacts for a plug that is insertable into the power outlet (not shown in the figure). An earth contact 16-2 is shown extending into an insertion well of the power outlet. An aesthetic cover 30 is arranged on top of the base part 10, covering the frame 14. A complementing part 20 is arranged on top of the aesthetic cover 30, a part of complementing part 20 protruding into the base part 10. A first element or arrangement of a fixing mechanism in accordance with the third variant of the first aspect of the present invention is provided with the base part 10. The first element or arrangement, which is not explicitly marked in the figure, comprises a receiving section 102, e.g., a bore, which is configured to partially receive a second element or arrangement 200 of the fixing mechanism in accordance with the third variant of the first aspect of the present invention. Bore 102 has a first engagement structure 104, which in the example of figure 15 comprises a sawtooth-like inner surface of bore 102. The second element or arrangement 200 is inserted into bore 102, passing through an opening in the complementing part 20, which opening is configured for connecting or coupling with a corresponding structure of the second element or arrangement 200. Here, a portion of the second element or arrangement 200 comprises a screw-like body with a head arranged at a first end and a shaft extending therefrom. The connecting or coupling is achieved through the conical surface of the screw head and a corresponding conical surface of the bore 102, which have more or less identical slopes (not identified in the figure). The second element or arrangement 200 further comprises a third engagement structure 204 that is configured for interacting with the first engagement structure 104 provided with the first element or arrangement. Here, the third engagement structure 204 comprises a resilient locking element 204, similar to an expanding rivet, having two resilient legs 230 with outwardly protruding catch structures 232, e.g., hook-like appendages. The catch structures 232 are resiliently movable in a direction perpendicular to an axis A1 longitudinally passing through the second element or arrangement 200, which axis A1 also marks a rotational axis of a portion of the second element or arrangement 200 that is operable by a user by engaging a tool with a second engagement structure 202 (not shown in the figure) of the second element or arrangement 200. The shaft 206 of the screw-like body of the second element or arrangement 200 is passed through the resilient locking element 204 and is arranged between the resilient legs 230 and the outwardly protruding catch structures 232. The shaft 206 of the screw-like body of the second element or arrangement 200 has first protrusions 234 which, depending on a rotational position of the screw-like body relative to the resilient structure, push the resilient legs 230 and, thus, the catch structures 232 of the locking element 204 outwards, for engaging with the first engagement structure 104 of the base part 10, or permits the resilient legs 230 and, thus, the catch structures 232 of the locking element 204 to move towards each other, thereby disengaging from the first engagement structure 104 of the base part 10.

In the figure, an upper surface of complementing part 20 is not yet flush with an upper surface of the aesthetic cover 30. When the shaft of the screw-like body of the second element or arrangement 200 is rotated in a first direction by a certain amount, the protrusions 234 push the catch structures 232 outwards. When the screw-like body of the second element or arrangement 200 is rotated back, the protrusions no longer push the catch structures 232 outwards so that they can move back towards each other. The catch structures 232 may be resilient so as to permit a ratchet-like movement along axis A1, for aligning the upper surfaces of complementing part 20 and aesthetic cover 30, e.g., by simply pushing the second element or arrangement 200 and, thus, the complementing part 20 towards the bottom end B of the base part 10 until the upper surfaces are flush. Such alignment is effected against the force of one or more third resilient elements 132, which assert a force on the complementing part 20 directed away from the bottom end B of the base part 10. The resilient elements 132 may be a part of a cover 130 provided for covering the functional part 16-1 of the base part 10. A shutter 140 may be provided for covering openings in the cover 130 when no plug is inserted into the power outlet. Alternatively it is possible to push the complementing part 20 towards the bottom end B of the base part 10 until the upper surfaces are flush and only then push the second element or arrangement 200 in place and rotate the shaft of its screw-like body to force the catch structures 232 outwards.

Figure 16 shows a perspective view of a rotatable part or portion of an exemplary second element or arrangement 200 of the third variant of the fixing mechanism in accordance with the first aspect of the present invention. The rotatable part or portion part of the second element or arrangement 200 is generally screw-like, i.e., has a head section with a second engagement structure 202, e.g., a slot for receiving a blade of a screwdriver, and a shaft-like section 206. The shaft section 206 has one or more first protrusions 234 configured for engaging with the locking element 204 and for selectively pushing the one or more catch structures 232 outwards or permitting a movement of the resilient legs 230 and thus the catch structures 232 towards the shaft 206 or towards each other, depending on the rotational position of the shaft 206 and the locking element 204 relative to each other. The shaft 206 further has second protrusions 236 arranged at a second end of the shaft, opposite to the first end which, depending on the rotational position of the shaft 206 and the locking element 204 relative to each other, may engage with the locking element 204 for extracting the second element or arrangement 200 from the base part 10 as a whole. To this end the part of the locking element 204 connecting the resilient legs 230 may have slits extending from a through hole formed therein, which permit passing the second protrusions 326 only in one rotational position of the shaft 206 and the locking element 204 relative to each other. This construction prevents dissociation of the locking element 204 from the second element or arrangement 200.

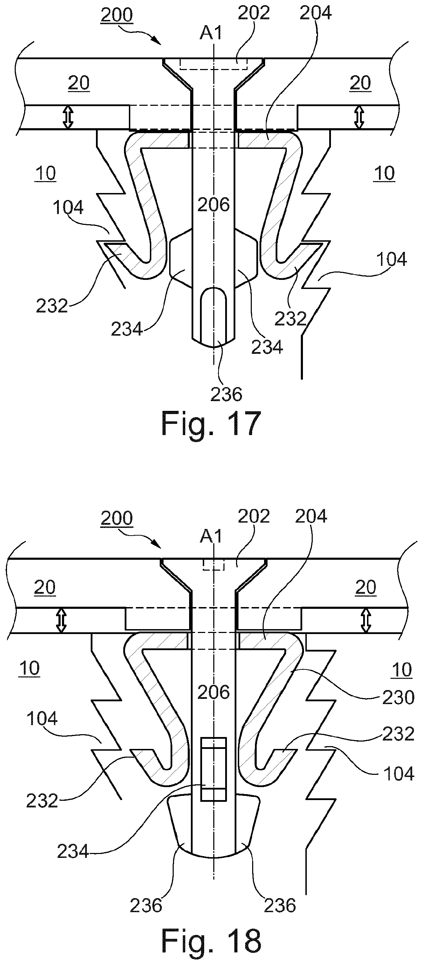

Figure 17 shows a schematic cross-sectional view of the cooperation of engaged first and third engagement structures 104, 204 of the fixing mechanism in accordance with the third variant of the first aspect of the invention. The first protrusions 234 arranged on the shaft section 206 are engaged with the legs 230 of the locking element 204 and push the legs and the catch structures 232 outwards. The catch structures 232 engage with the first engagement structures 104 of the base part 10 and prevent any significant movement of the second element or arrangement 200 relative to the first element or arrangement along the first axis A1, and consequently any significant movement of the complementing part 20 with regard to the base part 10 due to the engagement and the spring-loading between the base part 10 and the complementing part 20, which is indicated by the double-pointed arrows. Only portions of base part 10 and complementing part 20 are shown in the figure. An adjustment of the positions of base part 10 and complementing part 20 relative to each other is possible by engaging in a corresponding one of the multiple sawtooth-like features of the first engagement structure 104. It is to be noted that if the catch structures 232 are flexible it may be possible to push the locking element 204 in one direction along the first axis A1 against the force of the spring-loading, while a movement in the opposite direction is prevented by the shape of the catch structures 232.

Figure 18 shows a schematic cross-sectional view of the cooperation of disengaged first and third engagement structures 104, 204 of the fixing mechanism in accordance with the third variant of the first aspect of the invention shown in figure 17. In the figure the shaft 206 has been rotated and the first protrusions 234 no longer push the resilient legs 230 outwards. The resilient legs have, thus, retracted towards the shaft 206, and the catch structures 232 have disengaged from the respective portions of the first engagement structure 104. In this position the second element or arrangement 200 can be inserted into the base part 10, extracted therefrom, or adjusted along the first axis A1. The rotation of the shaft 206 has brought the second protrusions 236 in a position in which they can engage with an end of the resilient legs 230. Such engagement permits removing the locking element 204 together with the screw-like part of the second element or arrangement 200. In the figure the element or arrangement 200 has already moved along the first axis A1 by a small amount, as indicated by the top of the screw-like part no longer being flush with the surface of complementing part 20.

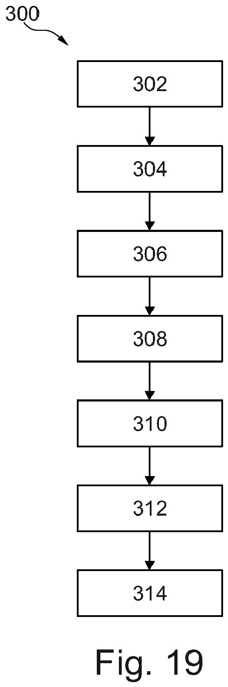

Figure 19 shows a flow diagram of a method 300 in accordance with the third aspect of the present invention of installing an apparatus 1 of an electrical installation having a fixing mechanism in accordance with the first aspect of the invention. In step 302 a base part 10 and a complementing part 20 are provided. Optionally, an aesthetic cover 30 may also be provided and, if not provided together with the complementing part 20, a second element or arrangement 200 is provided. In step 304 the base part 10 is connected with an electrical installation, e.g., by connecting corresponding terminals or the like. Next, the base part 10 is mounted in a desired location in step 306. If fixing the base part 10 in the desired location is required, this can be done in optional step 308. In step 310 the base part 10 and the complementing part 20 are mated. If an aesthetic cover 30 has been provided in step 302, the aesthetic cover 30 is accordingly placed when mating the base part 10 and the complementing part 20. If the second element or arrangement 200 is not already provided with the complementing part 20 it may be inserted into the complementing part 20 and the base part 10 in step 312. Finally, in step 314, the second element or arrangement, or at least a part thereof, is pushed and/or rotated until the complementing part 20 attains a predetermined or desired position relative to the base part 10.

**LIST OF REFERENCE DESIGNATORS (PART OF THE DESCRIPTION)**

| | | | |
|---|---|---|---|
| 1 | apparatus | 200 | second element/arrangement |
| 10 | base part | 202 | second engagement structure |
| 12 | first body part | 204 | third engagement structure / |
| 14 | frame | | locking element |
| 16 | functional part | 206 | shaft-like section |
| 16-2 | earth contact | 208 | engagement pin |
| 16-4 | earth alveolus | 210 | elongated hole |
| 20 | complementing part | 220 | first radial sector |
| 24 | opening | 222 | second radial sector |
| 26 | cut-out | 224 | securing element |
| 30 | aesthetic cover | 230 | resilient leg |
| 102 | receiving section | 232 | catch structure |
| 104 | first engagement structure | 234 | first protrusion |
| 110 | engagement surface/area | 236 | second protrusion |
| 112 | bevelled edge | 300 | method |
| 120 | first resilient element | 302 | providing |
| 122 | edge/rim | 304 | connecting |
| 124 | second resilient element | 306 | mounting |
| 126 | plunger | 308 | mating |
| 130 | cover | 310 | providing |
| 132 | third resilient element | 312 | push/rotate |
| 134 | mounting section | A1 | first axis |
| 136 | locking element | B | bottom end of base part |
| 138 | cut-out | | |
| 140 | shutter | | |

## Claims

1. Fixing mechanism of an apparatus (1) of an electrical installation, the apparatus (1) having a base part (10) and a complementing part (20) mountable thereon, the fixing mechanism being configured for releasably fixing the complementing part (20) to the base part (10) and comprising a first element or arrangement that is not operable by a user, and a second element or arrangement (200) that is operable by a user, wherein the first element or arrangement comprises a receiving section (102) adapted to at least partially receive at least portions of the second element or arrangement (200), and wherein the receiving section (102) further comprises a first engagement structure (104), wherein the first element or arrangement is integral to the base part (10), or is configured for connecting or coupling with a corresponding structure thereof by shape and/or force, wherein a second engagement structure (202) configured for being engageable by a tool operated by the user is arranged at a first end of the second element or arrangement (200), wherein at least a part or portion of the second element or arrangement (200) is rotatable around a first axis (A1) passing through the first end of the second element or arrangement (200) and a second end of the second element or arrangement (200), opposite to the first end, wherein the second element or arrangement (200) comprises a third engagement structure (204), arranged distal from the first end of the second element or arrangement (200) and configured for interacting with the first engagement structure (104) provided with the first element or arrangement, wherein the second element or arrangement (200) is configured for connecting or coupling with the complementing part (20) by shape and/or force, and wherein the first engagement structure (104) is configured to engage with the third engagement structure (204) for blocking a movement of the first element or arrangement relative to the second element or arrangement (200) along the first axis (A1), when the first element or arrangement and the rotatable part or portion of the second (200) element or arrangement, are in one of two or more first rotational positions relative to each other, and to enable or permit such relative movement along the first axis (A1) when the first element or arrangement and the rotatable part or portion of the second (200) element or arrangement are in a second rotational position relative to each other.

2. Fixing mechanism according to claim 1, wherein the first engagement structure (104) comprises step-like engagement surfaces (110), or engagement areas, arranged along at least a portion of a circumference of the receiving section (102), wherein the rotatable part or portion of the second element or arrangement (200) has a shaft-like section (206), and wherein the third engagement structure (204) of the second element or arrangement (200) comprises at least one engagement pin (208) protruding outwards from the shaft-like section (206).

3. Fixing mechanism according to claim 2, wherein the at least one engagement pin (208) is movably mounted in or on the shaft-like section (206), permitting a movement along or parallel to the first axis (A1), the movement being limited within an upper and a lower limit.

4. Fixing mechanism according to claim 2 or 3, wherein the engagement pin (208) is spring-loaded in a direction towards the second engagement structure (202) of the second element or arrangement (200).

5. Fixing mechanism according to one of claims 2 to 4, wherein adjacent step-like engagement surfaces (110), or engagement areas, are separated from each other by a ridge (112) rising above the respective engagement surface (110), or engagement area.

6. Fixing mechanism according to claim 1, wherein the first engagement structure (104) comprises one or more edges or rims (122) of one or more first resilient elements (120), wherein the rotatable part or portion of the second element or arrangement has a shaft-like section (206) that has a smooth surface in a first radial sector (220), and that has two or more circumferential grooves in a radial second sector (222) that abuts the first radial sector (220).

7. Fixing mechanism according to claim 6, wherein a second resilient element (124) is arranged with the first element or arrangement, which second resilient element (124) is arranged to spring-load the second element or arrangement (200) in at least one of the at least two axial positions of the first element or arrangement and the rotatable part or portion of the second element or arrangement (200) relative to each other.

8. Fixing mechanism according to claim 6 or 7, wherein a securing element (224) is provided with the second element or arrangement (200), which securing element (224) is configured for cooperating with a securing structure of the complementing part (20), for preventing separation of the second element or arrangement (200) from the complementing part (20).

9. Fixing mechanism according to one of claims 6 to 8, wherein the first resilient element (120) and/or the second resilient element (124) is/are electrically connected to an earth contact of the apparatus (10) of an electrical installation.

10. Fixing mechanism according to one of claims 6 to 9, wherein the first engagement structure (104), the first resilient element (120) and/or the second resilient element (124) are a single part.

11. Fixing mechanism according to claim 1, wherein the first engagement structure (104) comprises two or more edges or rims arranged in or on a receiving section (102), wherein the third engagement structure (204) comprises a locking element (204) that is associated with the second element or arrangement (200), wherein the receiving section (102) is arranged to at least partially receive the second element or arrangement (200) and the locking element (204) associated therewith, wherein the locking element (204) has one or more resilient legs (230), a catch structure (232) protruding from each leg (230), wherein the second element or arrangement (200) has one or more first protrusions (234) arranged proximal to the second end of the second element or arrangement (200), the one or more first protrusions (234) being configured to push the one or more resilient legs (230) away from the rotatable part or portion of the second element or arrangement (200) when the rotatable part or portion of the second element or arrangement (200) is in a first rotational position relative to the locking element (204), forcing the respective catch structure (232) of the one or more resilient legs (230) to engage with one of the two or more edges or rims arranged in or on the receiving section (102), and permitting the respective catch structure (232) of the one or more resilient legs (230) to disengage from the edges or rims arranged in or on the receiving section (102) when the second element or arrangement (200) is in a second rotational position relative to the locking element (204).

12. Fixing mechanism according to claim 11, wherein the locking element (204) is secured against dissociation from the second element or arrangement (200).

13. Fixing mechanism according to claim 11 or 12, wherein guide means are provided in the base part (10) and/or in or on the receiving section (102), for preventing a rotation of the locking element (204) in the receiving section (102) when the rotatable part or portion of the second element or arrangement (200) is rotated.

14. Base part (10) of an apparatus (1) of an electrical installation, the base part (10) comprising a first body part (12) and a functional part (16, 16-2, 16-4), the first body part (12) comprising a housing or enclosure and a first element or arrangement of a fixing mechanism in accordance with one or more of claims 1 to 13.

15. Complementing part (20) of an apparatus (1) of an electrical installation, the complementing part (20) comprising a second body part that comprises or is adapted to receive or hold a second element or arrangement (200) of a fixing mechanism in accordance with one or more of claims 1 to 13.

16. Apparatus (1) of an electrical installation, the apparatus (1) comprising a base part (10) in accordance with claim 14 and a complementing part (20) in accordance with claim 15.

17. Method (300) of installing an apparatus (1) of an electrical installation in accordance with claim 16 comprising:
- providing (302) a base part (10) and a complementing part (20),
- connecting (304) the base part (10) with the electrical installation,
- mounting (306) the base part (10) in a designated location,
- mating (310) the base part (10) and the complementing part (20), and
- pushing and/or rotating (314) the second element or arrangement (200) of the fixing mechanism, or at least a part thereof, until the complementing part (20) attains a predetermined or desired position relative to the base part (10).
